# EUROPÄISCHE PATENTSCHRIFT

(11) **EP 3 265 694 B1**
(45) Veröffentlichungstag und Bekanntmachung des Hinweises auf die Patenterteilung: **31.07.2019**
(21) Anmeldenummer: 16717094.3
(22) Anmeldetag: 22.02.2016
(51) Int. Cl.: F16F 15/14

(54) **FLIEHKRAFTPENDEL UND ANTRIEBSSYSTEM**
CENTRIFUGAL FORCE PENDULUM AND DRIVE SYSTEM
PENDULE CENTRIFUGE ET SYSTÈME D'ENTRAÎNEMENT

(30) Priorität: 05.03.2015 DE 102015204011
(43) Veröffentlichungstag der Anmeldung: 10.01.2018
(73) Patentinhaber: Schaeffler Technologies AG & Co. KG, 91074 Herzogenaurach (DE)
(72) Erfinder: GAUS, Nicole, 76137 Karlsruhe (DE); WAHL, Peter, 76744 Wörth-Maximiliansau (DE); VÖGTLE, Benjamin, 76137 Karlsruhe (DE); BARAL, Florian, 76337 Waldbronn (DE)
(86) Internationale Anmeldenummer: PCT/DE2016/200103
(87) Internationale Veröffentlichungsnummer: WO 2016/138898

(56) Entgegenhaltungen:
- WO-A1-2014/005907
- DE-A1-102012 221 103
- DE-A1-102014 210 489

## Beschreibung

Die Erfindung betrifft ein Fliehkraftpendel gemäß Patentanspruch 1 und ein Antriebssystem mit solch einem Fliehkraftpendel gemäß Patentanspruch 7.

Es sind Antriebssysteme mit einem Antriebsmotor und einem Fliehkraftpendel bekannt, wobei das Fliehkraftpendel mit dem Antriebsmotor gekoppelt ist. Der Antriebsmotor kann beispielsweise eine Zylinderabschaltung aufweisen, bei der zumindest ein Teil der Zylinder des Antriebsmotors deaktiviert wird und beispielsweise von einer Brennstoffversorgung getrennt wird. Weist der Antriebsmotor dabei eine Anregungsordnung von n₁ = 1 auf, so wirkt sich eine Schwerkraft auf ein Tilgerverhalten des Fliehkraftpendels negativ aus.

Aus der DE 10 2014 210 489 A1, der WO 2014/005907 und der DE 10 2012 221 103 A1 ist ein Fliehkraftpendel bekannt, das auf den Oberbegriff des Patentanspruchs 1 lesbar ist.

Es ist Aufgabe der Erfindung, ein verbessertes Fliehkraftpendel und ein verbessertes Antriebssystem mit solch einem Fliehkraftpendel bereitzustellen.

Erfindungsgemäß wird die Aufgabe durch ein verbessertes Fliehkraftpendel gemäß Patentanspruch 1 gelöst. Des Weiteren wird die Aufgabe gelöst durch ein Antriebssystem mit solch einem Fliehkraftpendel gemäß Patentanspruch 7.

Die Federeinrichtung sorgt dafür, dass die Pendelmassen bei Durchführung einer Pendelbewegung im Wesentlichen synchron pendeln. Ferner wird ein Einfluss einer Schwerkraft auf die Pendelmassen, insbesondere bei einer Anregungsordnung von n = 1, reduziert.

In einer weiteren Ausführungsform weist die Federeinrichtung eine Steifigkeit mit einem Wert auf, der in einem Bereich von 1 N/mm bis 24 N/mm, insbesondere in einem Bereich von 2 N/mm bis 12 N/mm, besonders vorteilhafterweise in einem Bereich von 3 N/mm bis 8 N/mm, liegt und/oder wobei das Fliehkraftpendel wenigstens eine Tilgerordnung aufweist, wobei die Tilgerordnung im Wesentlichen gleich 1 ist. Dadurch wird eine unsymmetrische Bewegung der Pendelmassen, insbesondere bei einer Anregungsordnung von n = 1, vermieden.

In einer weiteren Ausführungsform umfasst die Federeinrichtung ein erstes Federelement und wenigstens ein zweites Federelement, wobei die Federeinrichtung zumindest abschnittsweise auf einer Kreisbahn um die Drehachse oder auf einer Tangente zu der Kreisbahn um die Drehachse angeordnet ist, wobei das erste Federelement in Umfangsrichtung eine erste Erstreckung und das zweite Federelement eine zweite Erstreckung aufweist, wobei die zweite Erstreckung kürzer ist als die erste Erstreckung. Dadurch wird eine zweistufige Steifigkeit der Federeinrichtung erreicht.

In einer weiteren Ausführungsform ist das zweite Federelement koaxial zu dem ersten Federelement angeordnet und wird umfangsseitig durch das erste Federelement umgriffen. Dadurch wird eine besonders kompakte Federeinrichtung bereitgestellt.

In einer weiteren Ausführungsform weist das erste Federelement eine erste Federsteifigkeit und das zweite Federelement eine zweite Federsteifigkeit auf, wobei die zweite Federsteifigkeit größer ist als die erste Federsteifigkeit. Durch die weiche Kopplung der beiden Pendelmassen durch das erste Federelement werden diese synchron in ihrer Pendelbewegung geführt. Sollten die beiden Pendelmassen jedoch aneinander anschlagen, wird eine Anschlagsenergie wirksam durch das zweite Federelement und dessen hohe Steifigkeit abgefangen, sodass ein auf Blockgehen des zweiten Federelements und somit ein direktes Anschlagen der Pendelmassen vermieden wird.

In einer weiteren Ausführungsform ist in Umfangsrichtung zwischen der Federeinrichtung und wenigstens einer der beiden Pendelmassen eine Schutzeinrichtung vorgesehen, wobei vorzugsweise die Schutzeinrichtung in ein Ende der Federeinrichtung eingepresst ist. Auf diese Weise wird eine Position der Schutzeinrichtung auf einfache Weise gesichert.

In einer weiteren Ausführungsform ist wenigstens eine Halteeinrichtung vorgesehen. Die Halteeinrichtung ist formschlüssig mit einer der beiden Pendelmassen verbunden, wobei die Halteeinrichtung einen Stiftabschnitt umfasst. Die Schutzeinrichtung weist eine Aufnahme auf, wobei die Aufnahme im Wesentlichen mittig der Schutzeinrichtung angeordnet ist, wobei der Stiftabschnitt der Halteeinrichtung die Aufnahme durchgreift und die Schutzeinrichtung an der Halteeinrichtung befestigt.

In einer weiteren Ausführungsform ist die erste Pendelmasse mittels einer ersten Koppeleinrichtung und die zweite Pendelmasse mittels einer zweiten Koppeleinrichtung mit dem Pendelflansch gekoppelt, wobei die erste Koppeleinrichtung ausgebildet ist, die erste Pendelmasse entlang einer ersten Pendelbahn und die zweite Koppeleinrichtung die zweite Pendelmasse entlang einer zweiten Pendelbahn zu führen, wobei die erste Pendelbahn und die zweite Pendelbahn im Wesentlichen identisch sind.

Die Aufgabe wird aber auch durch ein Antriebssystem gemäß Patentanspruch 9 gelöst.

Erfindungsgemäß wurde erkannt, dass ein verbessertes Antriebssystem dadurch bereitgestellt werden kann, dass das Antriebssystem einen Antriebsmotor und ein Fliehkraftpendel aufweist. Der Antriebsmotor ist als Hubkolbenmotor ausgebildet und weist eine Anregungsordnung von n = 1 auf. Das Fliehkraftpendel ist wie oben beschrieben ausgebildet und mit dem Antriebsmotor gekoppelt. Die Tilgerordnung entspricht dabei im Wesentlichen der Anregungsordnung. Dadurch kann eine besonders hohe Tilgung der Anregungsordnung des Antriebsmotors erzielt werden, sodass ein besonders glattes Drehmoment ausgangsseitig des Fliehkraftpendels bereitgestellt werden kann.

Nachfolgend wird die Erfindung anhand von Figuren näher erläutert. Dabei zeigen:
Figur 1 ein Antriebssystem mit einem Antriebsmotor und einem Fliehkraftpendel;
Figur 2 eine Draufsicht auf eine konstruktive Ausgestaltung des in Figur 1 gezeigten Fliehkraftpendels;
Figur 3 eine perspektivische Ansicht auf das in Figur 2 gezeigte Fliehkraftpendel;
Figur 4 einen Ausschnitt der in Figur 3 gezeigten perspektivischen Ansicht des Fliehkraftpendels;
Figur 5 eine Draufsicht auf das in den Figuren 2 bis 4 gezeigte Fliehkraftpendel;
Figur 6 eine Schnittansicht durch das in den Figuren 1 bis 5 gezeigte Fliehkraftpendel entlang einer in Figur 2 gezeigten ersten Schnittebene A-A;
Figur 7 eine Schnittansicht durch das in den Figuren 1 bis 4 gezeigte Fliehkraftpendel entlang einer in Figur 2 gezeigten zweiten Schnittebene B-B;
Figur 8 eine Schnittansicht durch das in den Figuren 1 bis 4 gezeigte Fliehkraftpendel entlang einer in Figur 2 gezeigten dritten Schnittebene C-C;
Figur 9 einen Ausschnitt der in Figur 8 gezeigten Schnittansicht des Fliehkraftpendels
Figur 10 einen Ausschnitt des in Figur 2 gezeigten Fliehkraftpendels;
Figur 11 eine Schnittansicht entlang einer in Figur 1 gezeigten vierten Schnittebene D-D durch das in Figur 2 gezeigte Fliehkraftpendel;
Figur 12 einen Ausschnitt einer perspektivischen Darstellung des in den Figuren 1 bis 11 gezeigten Fliehkraftpendels in teilmontiertem Zustand;
Figur 13 eine Explosionsdarstellung des in den Figuren 1 bis 12 gezeigten Fliehkraftpendels;
Figur 14 eine Explosionsdarstellung einer Federeinrichtung und einer Schutzeinrichtung des in den Figuren 1 bis 13 gezeigten Fliehkraftpendels und
Figur 15 eine perspektivische Darstellung einer Halteeinrichtung des in den Figuren 1 bis 14 gezeigten Fliehkraftpendels.

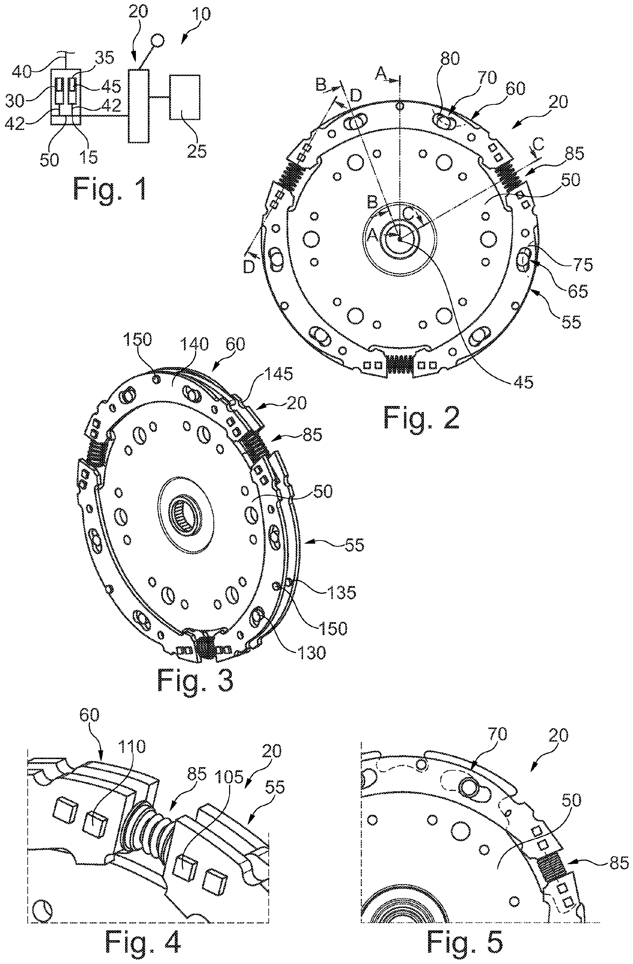

Figur 1 zeigt ein Antriebssystem 10 mit einem Antriebsmotor 15 und einem Fliehkraftpendel 20.

Ferner umfasst das Antriebssystem 10 eine Übersetzungseinrichtung 25. Das Fliehkraftpendel 20 ist zwischen dem Antriebsmotor 15 und der Übersetzungseinrichtung 25 angeordnet und mit dem Antriebsmotor 15 und der Übersetzungseinrichtung 25 gekoppelt.

Der Antriebsmotor 15 ist als Hubkolbenmotor ausgebildet. Der Antriebsmotor 15 umfasst einen ersten Zylinder 30 und wenigstens einen zweiten Zylinder 35. Die beiden Zylinder 30, 35 sind mit einer Brennstoffversorgung 40 verbunden. In den Zylindern 30, 35 ist jeweils ein Kolben 41 vorgesehen, der jeweils über ein Pleuel 42 mit einer Kurbelwelle 43 gekoppelt ist. Die Kurbelwelle 43 ist dabei mit dem Fliehkraftpendel 20 drehmomentschlüssig gekoppelt. Der Kolben 41 führt im Betrieb des Antriebsmotors 15 eine lineare alternierende Bewegung in dem Zylinder 30, 35 durch.

Der Antriebsmotor 15 weist beispielsweise einen ersten Betriebszustand und einen zweiten Betriebszustand auf. In dem ersten Betriebszustand sind die Zylinder 30, 35 mit der Brennstoffversorgung 40 gekoppelt, sodass in regelmäßigen zeitlichen Abständen Brennstoff aus der Brennstoffversorgung 40 in die Zylinder 30, 35 gefördert wird, um den Brennstoff zusammen mit Luftsauerstoff in den Zylindern 30, 35 zu verbrennen. Dabei wird jeweils der Kolben 41 des entsprechenden Zylinders 30, 35 in Figur 1 nach unten verschoben und ein Drehmoment auf der Kurbelwelle 43 bereitgestellt. In dem ersten Betriebszustand weist der Antriebsmotor 15 eine erste Anregungsordnung n₁. Die Anregungsordnung n entspricht dabei der Hälfte der im Betrieb befindlichen Zylinder 30, 35 des Antriebsmotors 15. So ist die erste Anregungsordnung n₁ des in Figur 1 gezeigten als Zweizylinder-Hubkolbenmotor ausgebildeten Antriebsmotors 15 im ersten Betriebszustand n₁ = 1. Bei einem als Vierzylinder-Hubkolbenmotor ausgebildeten Antriebsmotor 15 ist im ersten Betriebszustand die erste Anregungsordnung n₁ = 2.

Im zweiten Betriebszustand wird wenigstens einer der beiden Zylinder 30, 35 von der Brennstoffversorgung 40 getrennt und somit der entsprechende Zylinder 30, 35 abgeschaltet. Der zweite Betriebszustand wird insbesondere dann gewählt, wenn der Antriebsmotor 15 nur eine geringe Leistung bereitzustellen hat. Im zweiten Betriebszustand weist der Antriebsmotor 15 somit eine vom ersten Betriebszustand und der ersten Anregungsordnung n₁ unterschiedliche zweite Anregungsordnung n₂ auf. Wird in Figur 1 der zweite Zylinder 35 deaktiviert, so ist die zweite Anregungsordnung n₂ = 0,5. Werden bei dem oben erwähnten Vierzylinder-Hubkolbenmotor zwei Zylinder 30, 35 deaktiviert, so beträgt in diesem Falle die zweite Anregungsordnung n₂ = 1.

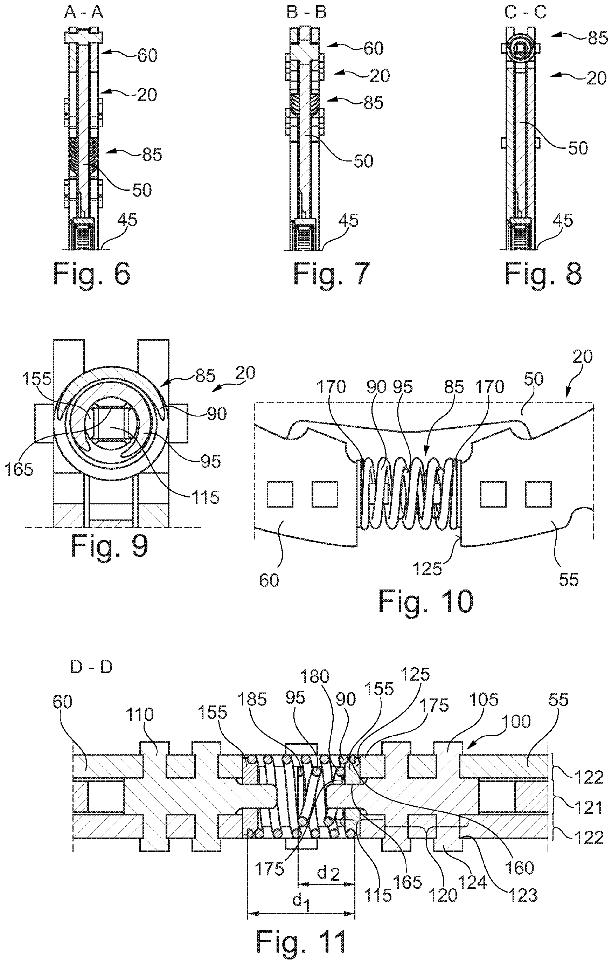

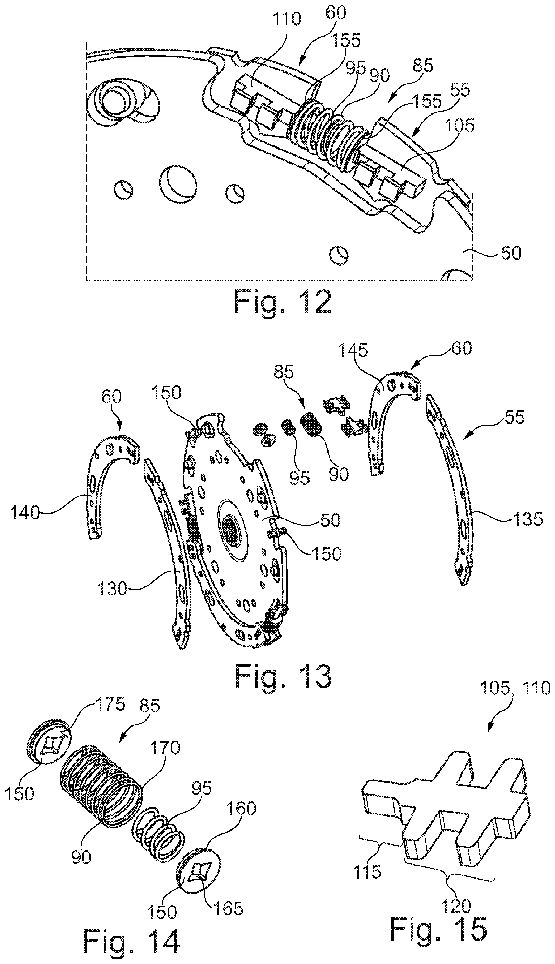

Figur 2 zeigt eine Draufsicht auf eine konstruktive Ausgestaltung des in Figur 1 gezeigten Fliehkraftpendels 20. Figur 3 zeigt eine perspektivische Ansicht auf das in Figur 2 gezeigte Fliehkraftpendel 20. Figur 4 zeigt einen Ausschnitt der in Figur 3 gezeigten perspektivischen Ansicht des Fliehkraftpendels 20. Figur 5 zeigt eine Draufsicht auf das in den Figuren 2 bis 4 gezeigte Fliehkraftpendel 20. Figur 6 zeigt eine Schnittansicht durch das in den Figuren 1 bis 5 gezeigte Fliehkraftpendel 20 entlang einer in Figur 2 gezeigten ersten Schnittebene A-A. Figur 7 zeigt eine Schnittansicht durch das in den Figuren 2 bis 4 gezeigte Fliehkraftpendel 20 entlang einer in Figur 2 gezeigten zweiten Schnittebene B-B. Figur 8 zeigt eine Schnittansicht durch das in den Figuren 2 bis 4 gezeigte Fliehkraftpendel 20 entlang einer in Figur 2 gezeigten dritten Schnittebene C-C. Figur 9 zeigt einen Ausschnitt der in Figur 8 gezeigten Schnittansicht des Fliehkraftpendels 20. Figur 10 zeigt einen Ausschnitt des in Figur 2 gezeigten Fliehkraftpendels 20. Figur 11 zeigt eine Schnittansicht entlang einer in Figur 1 gezeigten vierten Schnittebene D-D durch das in Figur 2 gezeigte Fliehkraftpendel 20. Figur 12 zeigt einen Ausschnitt einer perspektivischen Darstellung des in den Figuren 1 bis 11 gezeigten Fliehkraftpendels 20 in teilmontiertem Zustand. Figur 13 eine Explosionsdarstellung des in den Figuren 1 bis 12 gezeigten Fliehkraftpendels 20. Figur 14 zeigt eine Explosionsdarstellung einer Federeinrichtung 85 und einer Schutzeinrichtung 155 des in den Figuren 1 bis 13 gezeigten Fliehkraftpendels 20 und Figur 15 zeigt eine perspektivische Darstellung einer Halteeinrichtung 105, 110 des in den Figuren 1 bis 14 gezeigten Fliehkraftpendels 20. Nachfolgend sollten die Figuren 2 bis 15 gemeinsam erläutert werden.

Das Fliehkraftpendel 20 ist drehbar um eine Drehachse 45 lagerbar. Das Fliehkraftpendel 20 umfasst einen Pendelflansch 50, der drehmomentschlüssig mit dem Antriebsmotor 15 und gegebenenfalls der Übersetzungseinrichtung 25 gekoppelt ist. Selbstverständlich ist auch eine Ausgestaltung des Fliehkraftpendels 20 als innenliegendes Fliehkraftpendel 20 denkbar. Der Pendelflansch 50 ist in der Ausführungsform im Wesentlichen scheibenförmig ausgebildet. Das Fliehkraftpendel 20 weist eine erste Pendelmasse 55 und eine zweite Pendelmasse 60 auf. Die erste Pendelmasse 55 ist beabstandet in Umfangsrichtung zur zweiten Pendelmasse 60 angeordnet. Das Fliehkraftpendel 20 umfasst ferner eine erste Koppeleinrichtung 65 und eine zweite Koppeleinrichtung 70. Die erste Koppeleinrichtung 65 ist nach Art einer Kulissenführung ausgebildet und koppelt die erste Pendelmasse 55 mit dem Pendelflansch 50. Dabei führt die erste Koppeleinrichtung 65 die erste Pendelmasse 55 bei Einleitung einer Drehschwingung in den Pendelflansch 50 entlang einer ersten Pendelbahn 75. Die zweite Koppeleinrichtung 70 koppelt die zweite Pendelmasse 60 mit dem Pendelflansch 50. Dabei führt die zweite Koppeleinrichtung 70 die zweite Pendelmasse 60 entlang einer zweiten Pendelbahn 80 bei Einleitung der Drehschwingung in den Pendelflansch 50. In Abhängigkeit der Ausgestaltung der Pendelbahn 75, 80 und einer Masse der Pendelmasse 55, 60 weist das Fliehkraftpendel 20 wenigstens eine Tilgerordnung auf, die in der Ausführungsform im Wesentlichen der Anregungsordnung n des Antriebsmotors 15 in wenigstens einem der beiden Betriebszustände entspricht.

In Umfangsrichtung zwischen der ersten Pendelmasse 55 und der zweiten zweiten Pendelmasse 60 ist die Federeinrichtung 85 angeordnet. Die Federeinrichtung 85 (vgl. Figur 14) umfasst ein erstes Federelement 90 und wenigstens ein zweites Federelement 95. Die Federeinrichtung 85 ist auf einer Tangente zu einer Kreisbahn um die Drehachse 45 angeordnet. Selbstverständlich wäre auch denkbar, dass die Federeinrichtung 85 bogenförmig auf einer Kreisbahn um die Drehachse 45 verläuft.

Auch ist denkbar, dass anstatt der in den Figuren 2 bis 15 gezeigten Ausgestaltung der Federelemente 90, 95 als Schraubendruckfeder das Federelement 90, 95 andersartig, beispielsweise als Blechfeder, ausgestaltet ist. Alternativ ist auch denkbar, dass das zweite Federelement 95 als Gummielement oder ein anderes flexibles Bauteil ausgebildet ist.

Das zweite Federelement 95 ist koaxial zu dem ersten Federelement 90 angeordnet und umfangsseitig durch das erste Federelement 90 umgriffen. Das erste Federelement 90 (vgl. Figur 11) weist in Umfangsrichtung eine erste Erstreckung d₁ auf. Das zweite Federelement 95 weist in Umfangsrichtung eine zweite Erstreckung d₂ auf. Die zweite Erstreckung d₂ ist dabei kürzer als die erste Erstreckung d₁.

Alternativ ist auch denkbar, dass das zweite Federelement 95 einen größeren Durchmesser aufweist als das erste Federelement 90 und somit das erste Federelement 90 radial innenseitig des zweiten Federelements 95 koaxial angeordnet ist. In dieser Ausgestaltung ist auch denkbar, dass die zweite Erstreckung d₂ größer ist als die erste Erstreckung d₁.

Ferner umfasst das Fliehkraftpendel 20 eine Halteeinrichtung 100. Die Halteeinrichtung 100 umfast ein erstes Halteelement 105 und ein zweites Halteelement 110. Das erste Halteelement 105 ist mit der ersten Pendelmasse 55 formschlüssig verbunden. Das zweite Halteelement 110 ist mit der zweiten Pendelmasse 60 formschlüssig verbunden.

Das Halteelement 105, 110 weist einen Stiftabschnitt 115 und einen Halteabschnitt 120 auf. Der Halteabschnitt 120 weist einen im Wesentlichen in Umfangsrichtung oder auf einer Tangenten zur Kreisbahn um die Drehachse 45 verlaufenden ersten Bereich 121 und mehrere am ersten Bereich in axialer Richtung verlaufende zweite Bereiche 122 auf. Der erste Bereich 121 ist radial außenseitig des Pendelflanschs 50 angeordnet. Der zweite Bereich 122 durchgreift eine in der Pendelmasse 55, 60 angeordnete Ausnehmung 123 und weist am freien Ende einen Nietkopf 124 auf, so dass das Halteelement 105, 110 formschlüssig mit der Pendelmasse 55, 60 gekoppelt ist.

Der Stiftabschnitt 115 verläuft tangential zur Kreisbahn um die Drehachse 45. Der Stiftabschnitt 115 ragt dabei zumindest abschnittsweise über eine in radialer Richtung verlaufende Seitenfläche 125 der Pendelmasse 55, 60 heraus. Der Stiftabschnitt 115 ist abschnittsweise rechteckförmig ausgebildet.

In der Ausführungsform ist das Fliehkraftpendel 20 als außen liegendes Fliehkraftpendel ausgebildet (vgl. Figur 3). Dabei weist die erste Pendelmasse 55 ein erstes Pendelmassenteil 130 und ein zweites Pendelmassenteil 135 auf. Die zweite Pendelmasse 60 weist ein drittes Pendelmassenteil 140 und ein viertes Pendelmassenteil 145 auf. Das erste und zweite Pendelmassenteil 130, 135 sind beidseitig des Pendelflanschs 50 angeordnet und mittels des Halteabschnitts 120 und gegebenenfalls zusätzlich mittels eines Abstandsbolzens 150 und mittels des ersten Halteelements 105 miteinander verbunden. Selbiges gilt auch für das dritte Pendelmassenteil 140 und das vierte Pendelmassenteil 145, die beidseitig des Pendelflanschs 50 angeordnet sind und mittels des Halteabschnitts 120 des zweiten Halteelements 110 und des Abstandsbolzens 150 miteinander verbunden sind. Selbstverständlich ist auch eine Ausgestaltung des Fliehkraftpendels 20 als innenliegendes Fliehkraftpendel 20 denkbar.

Zusätzlich ist in der Ausführungsform beispielhaft die Schutzeinrichtung 155 vorgesehen (vgl. Figuren 11 und 14). Die Schutzeinrichtung 155 kann beispielsweise einen elastischen Kunststoff als Werkstoff aufweisen. Die Schutzeinrichtung 155 ist dabei scheibenartig ausgebildet und weist einen kreisförmigen Querschnitt auf. Die Schutzeinrichtung 155 weist radial außenseitig eine erste Aufnahme 160 auf. Radial innenseitig ist zentriert eine zweite Aufnahme 165 vorgesehen. Die zweite Aufnahme 165 weist im Wesentlichen einen rechteckförmigen Querschnitt auf, der korrespondierend zu dem Stiftabschnitt 115 ausgebildet ist. Der Stiftabschnitt 115 durchgreift dabei die zweite Aufnahme 165 in der Ausführungsform vollständig und ragt auf einer zum Halteabschnitt 120 abgewandten Seite der Schutzeinrichtung 155 über die Schutzeinrichtung 155 hervor.

Alternativist auch denkbar, dass auf die Schutzeinrichtung 155 verzichtet wird. Auch ist denkbar, dass die zweite Aufnahme 165 einen andersartigen Querschnitt aufweist. So ist beispielsweise auch für die zweite Aufnahme 165 ein runder oder ein quadratischer Querschnitt denkbar. Selbstverständlich ist der Stiftabschnitt 115 entsprechend zu der geometrischen Ausgestaltung der zweiten Aufnahme 165 ausgebildet.

Die erste Aufnahme 160 ist dabei als radial außenseitig an der Schutzeinrichtung 155 umlaufende Nut ausgebildet. In die erste Aufnahme 160 greift ein Ende 170 des ersten Federelements 90 ein. Um einen zuverlässigen Sitz der Schutzeinrichtung 155 auf dem ersten Federelement 90 zu gewährleisten, ist die Schutzeinrichtung 155 in das erste Federelement 90 eingepresst. Durch die erste Aufnahme 160 wird eine flächige Betätigung des ersten Federelements 90 gewährleistet, sodass eine Betätigung des ersten Federelements 90 im Wesentlichen ohne Querkräfte in einer Endwindung des ersten Federelements 90 erreicht wird.

An einer Seitenfläche 125 der Schutzeinrichtung 155, auf einer zur Seitenfläche 125 ab der Pendelmasse 55, 60 abgewandten Seite, liegt ein festes Ende 180 des zweiten Federelements 95 an. In unbetätigtem Zustand ist das zum festen Ende 180, auf der in Umfangsrichtung gegenüberliegenden Seite, angeordnete freie Ende 185 des zweiten Federelements 95 frei und weist keinen Berührkontakt zur in Umfangsrichtung gegenüberliegenden Schutzeinrichtung 155 auf.

In der Ausführungsform ist die Schutzeinrichtung 155 beidseitig der Federeinrichtung 85, also zwischen der Federeinrichtung 85 und der ersten Pendelmasse 55 und zwischen der Federeinrichtung 85 und der zweiten Pendelmasse 60, angeordnet. Selbstverständlich ist auch denkbar, dass nur eine Schutzeinrichtung 155 vorgesehen ist. Auch ist denkbar, dass auf die Schutzeinrichtung 155 verzichtet wird. Auch ist denkbar, dass auf die zweite Aufnahme 165 verzichtet wird und die Schutzeinrichtung 155 mittels der ersten Aufnahme 160 in ihrer Position gesichert wird. Auch ist denkbar, dass die Schutzeinrichtung 155 nur einseitig in das erste Federelement 90 gegenüber dem zweiten Federelement 95 eingepresst wird.

Stellt der Antriebsmotor 15 ein Drehmoment mit einer Drehschwingung bereit, so werden die Pendelmassen 55, 60 aus einer Ruhelage ausgelenkt und pendeln entlang der durch die Koppeleinrichtung 65, 70 vorgegebenen Pendelbahn 75, 80 über einen Pendelwinkel. Dabei koppelt die Federeinrichtung 85 die Pendelmassen 55, 60 miteinander, sodass die Pendelmassen 55, 60 im Wesentlichen synchron entlang der jeweiligen Pendelbahn 75, 80 pendeln. Dadurch wirkt die Federeinrichtung 90 über einen hohen Pendelwinkel von 20 bis 60 Grad als Positioniermittel. Dies ist besonders von Relevanz, wenn der Antriebsmotor 15 eine Anregungsordnung n im ersten oder zweiten Betriebszustand von n_{1/2} = 1 bereitstellt. Üblicherweise wird das Fliehkraftpendel 20 auf die Anregungsordnung n_{1/2} abgestimmt, das heißt, dass die Tilgerordnung des Fliehkraftpendels 20 im Wesentlichen identisch zu der Anregungsordnung n_{1/2} ist. Dadurch wird sichergestellt, dass eine maximale Tilgung der Anregungsordnung n durch das Fliehkraftpendel 20 erfolgt.

Beträgt die Anregungsordnung n_{1/2} = 1, wie beispielsweise beim Betrieb eines Zweizylindermotors oder bei einem Vierzylindermotor mit Zylinderabschaltung, bei dem im zweiten Betriebszustand zwei Zylinder 30, 35 abgeschaltet sind, und ist die Tilgerordnung des Fliehkraftpendels 20 auf die Anregungsordnung n_{1/2} abgestimmt, so wirkt sich eine auf die Pendelmassen 55, 60 wirkende Schwerkraft negativ auf das Pendelverhalten entlang der Pendelbahn 75, 80 aus. Die Schwerkraft führt in dieser Konstellation dazu, dass die in Schwerkraftrichtung nach unten pendelnde Pendelmasse 55, 60 beschleunigt wird und als die entgegen der Schwerkraftrichtung pendelnde Pendelmasse 55, 60.

Dabei ist von besonderem Vorteil, wenn die Federeinrichtung 85, insbesondere die das erste Federelement 90, eine Steifigkeit mit einem Wert aufweist, der in einem Bereich von 1 N/mm bis 24 N/mm, insbesondere in einem Bereich von 2 N/mm bis 12 N/mm, besonders vorteilhafterweise in einem Bereich von 3 N/mm bis 8 N/mm, liegt. Von besonderem Vorteil ist, wenn das erste Federelement 90, eine Steifigkeit mit einem Wert aufweist, der in einem Bereich von 1 N/mm bis 5 N/mm liegt, und das zweite Federelement 95, eine Steifigkeit mit einem Wert aufweist, der in einem Bereich von 5 N/mm bis 19 N/mm liegt.

Ferner wird durch die unterschiedlichen Erstreckungen d₁, d₂ der Federelemente 90, 95 der Federeinrichtung 85 zum einen eine weiche Kopplung der Pendelmassen 55, 60 und zum anderen ein zweistufiger Lauf einer Kennlinie der Federeinrichtung 85 erzielt. Dadurch kann, solange das freie Ende 185 beabstandet zur gegenüberliegend angeordneten Schutzeinrichtung 155 liegt, eine weiche Kopplung der Pendelmassen 55, 60 in Umfangsrichtung erzielt werden. Dadurch wird sichergestellt, dass bei einer Abstimmung des Fliehkraftpendels 20 auf eine Anregungsordnung n_{1/2} = 1 die Pendelmassen 55, 60 unabhängig von ihrer Lage synchron entlang der vorgegebenen Pendelbahn 75, 80 pendeln, sodass das Fliehkraftpendel 20 zum einen eine besonders hohe Tilgerwirkung aufweist, und zum anderen eine mögliche Anregung der Drehschwingung durch ein asynchrones Verhalten einer der Pendelmassen 55, 60 vermieden wird. Die weiche Ausgestaltung des ersten Federelements 90 bewirkt, dass die Federeinrichtung 85 sich nur geringfügig auf die Tilgerordnung des Fliehkraftpendels 20 und somit auf eine Isolationswirkung (Tilgerwirkung) des Fliehkraftpendels 20 auswirkt

Schlägt das freie Ende 185 an der gegenüberliegenden, in Umfangsrichtung angeordneten Schutzeinrichtung 155 an, verhindert das zweite Federelement 95 ein direktes Anschlagen der Pendelmassen 55, 60 aneinander oder die Koppeleinrichtung 65, 70 am Endanschlag anschlägt und somit ein Klappergeräusch des Fliehkraftpendels 20. Dies ist besonders dann von Vorteil, wenn eine erste Federsteifigkeit des ersten Federelements 90 geringer ist als eine zweite Federsteifigkeit des zweiten Federelements 95. Schlägt das freie Ende 185 an der gegenüberliegenden Schutzeinrichtung 155 an und wird somit das zweite Federelement 95 betätigt, so erhöht sich die Steifigkeit der Federeinrichtung 85. Dabei dient das zweite Federelement 95 als Speicher für eine Restenergie im Fliehkraftpendel 20 und verhindert ein hartes Anschlagen der Pendelmassen 55, 60 gegeneinander bzw. zum Pendelflansch 50. Durch die hohe Steifigkeit der Federeinrichtung 90, insbesondere durch die gekoppelte Wirkung beider Federelemente 95, 100, kann der Pendelwinkel zum Abfedern der Pendelmasse 55, 60 kurz gehalten (beispielsweise in einem Bereich von 5 bis 10 Grad) werden.

Ferner wird vermieden, dass bei Schaltvorgängen, zum Beispiel bei einem Wechsel von einer D-Fahrstufe auf eine N-Fahrstufe, die Pendelmassen 55, 60 aneinanderschlagen oder eine Restenergie beim Anschlagen der Pendelmassen 55, 60 oder eine vollständige Blockung der Federeinrichtung 85 so stark reduziert ist, dass ein Anschlaggeräusch akustisch akzeptabel bzw. stark reduziert ist. Selbstverständlich ist auch denkbar, dass die Federeinrichtung 85 mehrstufig, also mit wenigstens drei Stufen und wenigstens drei Federelementen ausgebildet ist.

## Patentansprüche

1. Fliehkraftpendel (20), das drehbar um eine Drehachse (45) lagerbar ist,
- aufweisend einen Pendelflansch (50), eine erste Pendelmasse (55), eine zweite Pendelmasse (60) und wenigstens eine Federeinrichtung (85),
- wobei die erste Pendelmasse (55) und die zweite Pendelmasse (60) jeweils mit dem Pendelflansch (50) gekoppelt sind,
- wobei die zweite Pendelmasse (60) beabstandet zu der ersten Pendelmasse (55) in Umfangsrichtung angeordnet ist,
- wobei die Federeinrichtung (85) in Umfangsrichtung zwischen der ersten Pendelmasse (55) und der zweiten Pendelmasse (60) angeordnet ist
- **dadurch gekennzeichnet, dass**
- in Umfangsrichtung zwischen der Federeinrichtung (85) und wenigstens einer der beiden Pendelmassen (55, 60) eine Schutzeinrichtung (155) vorgesehen ist,
- wobei vorzugsweise die Schutzeinrichtung (155) in ein Ende (170) der Federeinrichtung (85) eingepresst ist.
- wobei wenigstens eine Halteeinrichtung (105, 110) vorgesehen ist,
- wobei die Halteeinrichtung (105, 110) formschlüssig mit einer der beiden Pendelmassen (55, 60) verbunden ist,
- wobei die Halteeinrichtung (105, 110) einen Stiftabschnitt (115) umfasst,
- wobei die Schutzeinrichtung (155) eine Aufnahme (165) aufweist,
- wobei die Aufnahme (160, 165) im Wesentlich mittig in der Schutzeinrichtung (155) angeordnet ist,
- wobei der Stiftabschnitt (115) der Halteeinrichtung (105, 110) die Aufnahme (165) durchgreift und die Schutzeinrichtung (155) an der Halteeinrichtung (105, 110) befestigt.

2. Fliehkraftpendel (20) nach Anspruch 1,
- wobei die Federeinrichtung (85) eine Steifigkeit mit einem Wert aufweist, der in einem Bereich von 1 N/mm bis 24 N/mm, insbesondere in einem Bereich von 2 N/mm bis 12 N/mm, besonders vorteilhafterweise in einem Bereich von 3 N/mm bis 8 N/mm, liegt,
- und/oder
- wobei das Fliehkraftpendel (20) wenigstens eine Tilgerordnung aufweist,
- wobei die Tilgerordnung im Wesentlichen gleich 1 ist.

3. Fliehkraftpendel (20) nach Anspruch 1 oder 2,
- wobei die Federeinrichtung (85) ein erstes Federelement (90) und wenigstens ein zweites Federelement (95) umfasst,
- wobei die Federeinrichtung (85) zumindest abschnittsweise auf einer Kreisbahn um die Drehachse (45) oder auf einer Tangente zu der Kreisbahn um die Drehachse (45) angeordnet ist,
- wobei das erste Federelement (90) in Umfangsrichtung eine erste Erstreckung (d₁) und das zweite Federelement (95) eine zweite Erstreckung (d₂) aufweist,
- wobei die zweite Erstreckung (d₂) kürzer ist als die erste Erstreckung (d₁).

4. Fliehkraftpendel (20) nach Anspruch 3, wobei das zweite Federelement (95) koaxial zu dem ersten Federelement (90) angeordnet ist und umfangsseitig durch das erste Federelement (90) umgriffen wird.

5. Fliehkraftpendel (20) nach einem der Ansprüche 1 bis 4,
- wobei das erste Federelement (90) eine erste Federsteifigkeit und das zweite Federelement (95) eine zweite Federsteifigkeit aufweist,
- wobei die zweite Federsteifigkeit größer ist als die erste Federsteifigkeit.

6. Fliehkraftpendel (20) nach einem der Ansprüche 1 bis 5,
- wobei die erste Pendelmasse (55) mittels einer ersten Koppeleinrichtung (65) und die zweite Pendelmasse (60) mittels einer zweiten Koppeleinrichtung (70) mit dem Pendelflansch (50) gekoppelt sind,
- wobei die erste Koppeleinrichtung (65) ausgebildet ist, die erste Pendelmasse (55) entlang einer ersten Pendelbahn (75) und die zweite Koppeleinrichtung (70) die zweite Pendelmasse (60) entlang einer zweiten Pendelbahn (80) zu führen,
- wobei die erste Pendelbahn (75) und die zweite Pendelbahn (80) im Wesentlichen identisch sind.

7. Antriebssystem (10) mit einem Antriebsmotor (15) und einem Fliehkraftpendel (20),
- wobei der Antriebsmotor (15) als Hubkolbenmotor ausgebildet ist und eine Anregungsordnung (n) von n = 1 aufweist,
- wobei das Fliehkraftpendel (20) nach einem der Ansprüche 1 bis 6 ausgebildet und mit dem Antriebsmotor (15) gekoppelt ist,
- wobei das Fliehkraftpendel (20) wenigstens eine Tilgerordnung aufweist,
- wobei die Tilgerordnung des Fliehkraftpendels (20) im Wesentlichen der Anregungsordnung (n) entspricht.

## Claims

1. Centrifugal force pendulum (20) which can be mounted such that it can be rotated about a rotational axis (45),
- having a pendulum flange (50), a first pendulum mass (55), a second pendulum mass (60) and at least one spring device (85),
- the first pendulum mass (55) and the second pendulum mass (60) being coupled in each case to the pendulum flange (50),
- the second pendulum mass (60) being arranged spaced apart in the circumferential direction from the first pendulum mass (55),
- the spring device (85) being arranged in the circumferential direction between the first pendulum mass (55) and the second pendulum mass (60),
- **characterized in that**
- a protective device (155) is provided in the circumferential direction between the spring device (85) and at least one of the two pendulum masses (55, 60),
- the protective device (155) preferably being pressed into one end (170) of the spring device (85),
- at least one holding device (105, 110) being provided,
- the holding device (105, 110) being connected in a positively locking manner to one of the two pendulum masses (55, 60),
- the holding device (105, 110) comprising a pin section (115),
- the protective device (155) having a receptacle (165),
- the receptacle (160, 165) being arranged substantially centrally in the protective device (155),
- the pin section (115) of the holding device (105, 110) engaging through the receptacle (165) and fastening the protective device (155) to the holding device (105, 110).

2. Centrifugal force pendulum (20) according to Claim 1,
- the spring device (85) having a stiffness with a value which lies in a range from 1 N/mm to 24 N/mm, in particular in a range from 2 N/mm to 12 N/mm, particularly advantageously in a range from 3 N/mm to 8 N/mm,
- and/or
- the centrifugal force pendulum (20) having at least one absorber order,
- the absorber order being substantially equal to 1.

3. Centrifugal force pendulum (20) according to Claim 1 or 2,
- the spring device (85) comprising a first spring element (90) and at least one second spring element (95),
- the spring device (85) being arranged at least in sections on a circular path around the rotational axis (45) or on a tangent with respect to the circular path around the rotational axis (45),
- the first spring element (90) having a first extent (d₁) in the circumferential direction, and the second spring element (95) having a second extent (d₂),
- the second extent (d₂) being shorter than the first extent (d₁).

4. Centrifugal force pendulum (20) according to Claim 3, the second spring element (95) being arranged coaxially with respect to the first spring element (90) and being reached around on the circumferential side by way of the first spring element (90).

5. Centrifugal force pendulum (20) according to one of Claims 1 to 4,
- the first spring element (90) having a first spring stiffness, and the second spring element (95) having a second spring stiffness,
- the second spring stiffness being greater than the first spring stiffness.

6. Centrifugal force pendulum (20) according to one of Claims 1 to 5,
- the first pendulum mass (55) being coupled to the pendulum flange (50) by means of a first coupler device (65), and the second pendulum mass (60) being coupled to the pendulum flange (50) by means of a second coupler device (70),
- the first coupler device (65) being configured to guide the first pendulum mass (55) along a first pendulum path (75), and the second coupler device (70) being configured to guide the second pendulum mass (60) along a second pendulum path (80),
- the first pendulum path (75) and the second pendulum path (80) being substantially identical.

7. Drive system (10) having a drive motor (15) and a centrifugal force pendulum (20),
- the drive motor (15) being configured as a reciprocating piston engine and having an order of excitation (n) of n = 1,
- the centrifugal force pendulum (20) being configured according to one of Claims 1 to 6 and being coupled to the drive motor (15),
- the centrifugal force pendulum (20) having at least one absorber order,
- the absorber order of the centrifugal force pendulum (20) corresponding substantially to the order of excitation (n).

## Revendications

1. Pendule centrifuge (20), qui peut être logé pouvant tourner autour d'un axe de rotation (45),
- comportant un flasque de pendule (50), une première masse de pendule (55), une deuxième masse de pendule (60) et au moins un dispositif à ressort (85),
- sachant que la première masse de pendule (55) et la deuxième masse de pendule (60) sont respectivement couplées au flasque de pendule (50),
- sachant que la deuxième masse de pendule (60) est placée à distance de la première masse de pendule (55) dans le sens périphérique,
- sachant que le dispositif à ressort (85) est placé dans le sens périphérique entre la première masse de pendule (55) et la deuxième masse de pendule (60),
- **caractérisé en ce**
- **qu'**un dispositif de protection (155) est prévu dans le sens périphérique entre le dispositif à ressort (85) et au moins une des deux masses de pendules (55, 60),
- sachant que de préférence le dispositif de protection (155) est enfoncé dans une extrémité (170) du dispositif à ressort (85),
- sachant qu'au moins un dispositif de retenue (105, 110) est prévu,
- sachant que le dispositif de retenue (105, 110) est relié par conformité de forme à une des deux masses de pendule (55, 60),
- sachant que le dispositif de retenue (105, 110) comprend une section de tige (115),
- sachant que le dispositif de protection (155) comporte un logement (165),
- sachant que le logement (160, 165) est placé pour l'essentiel au centre dans le dispositif de protection (155),
- sachant que la section à tige (115) du dispositif de retenue (105, 110) traverse le logement (165) et fixe le dispositif de protection (155) au dispositif de retenue (105, 110).

2. Pendule centrifuge (20) selon la revendication 1,
- sachant que le dispositif à ressort (85) présente une rigidité avec une valeur qui se situe dans une plage de 1 N/mm à 24 N/mm, notamment dans une plage de 2 N/mm à 12 N/mm, notamment de façon avantageuse dans une plage de 3 N/mm à 8 N/mm,
- et/ou
- sachant que le pendule centrifuge (20) comporte au moins un système antivibratoire,
- sachant que le système antivibratoire est pour l'essentiel égal à 1.

3. Pendule centrifuge (20) selon la revendication 1 ou 2,
- sachant que le dispositif à ressort (85) comprend un premier élément à ressort (90) et au moins un deuxième élément à ressort (95),
- sachant que le dispositif à ressort (85) est placé au moins par section sur une trajectoire circulaire autour de l'axe de rotation (45) ou sur une tangente à la trajectoire circulaire autour de l'axe de rotation (45),
- sachant que le premier élément à ressort (90) comporte dans le sens périphérique une première extension (d₁) et le deuxième élément à ressort (95) une deuxième extension (d₂),
- sachant que la deuxième extension (d₂) est plus courte que la première extension (d₁).

4. Pendule centrifuge (20) selon la revendication 3, sachant que le deuxième élément à ressort (95) est disposé de façon coaxiale au premier élément à ressort (90) et est enveloppé sur la périphérie par le premier élément à ressort (90).

5. Pendule centrifuge (20) selon l'une quelconque des revendications 1 à 4,
- sachant que le premier élément à ressort (90) comporte une première rigidité de ressort et le deuxième élément à ressort (95) une deuxième rigidité élastique,
- sachant que la deuxième rigidité de ressort est plus grande que la première rigidité élastique.

6. Pendule centrifuge (20) selon l'une quelconque des revendications 1 à 5,
- sachant que la première masse de pendule (55) au moyen d'un premier dispositif de couplage (65) et la deuxième masse de pendule (60) au moyen d'un deuxième dispositif de couplage (70) sont couplées au flasque de pendule (50),
- sachant que le premier dispositif de couplage (65) est constitué pour guider la première masse de pendule (55) le long d'une première trajectoire de pendule (75) et le deuxième dispositif de couplage (70) la deuxième masse de pendule (60) le long d'une deuxième trajectoire de pendule (80),
- sachant que la première trajectoire de pendule (75) et la deuxième trajectoire de pendule (80) sont pour l'essentiel identiques.

7. Système d'entraînement (10) avec un moteur d'entraînement (15) et un pendule centrifuge (20),
- sachant que le moteur d'entraînement (15) est constitué comme un moteur alternatif à pistons et comporte un système d'excitation (n) de n = 1,
- sachant que le pendule centrifuge (20) est constitué selon l'une quelconque des revendications 1 à 6 et est couplé au moteur d'entraînement (15),
- sachant que le pendule centrifuge (20) comporte au moins un système antivibratoire,
- sachant que le système antivibratoire du pendule centrifuge (20) correspond pour l'essentiel au système d'excitation (n).
